# DEMANDE DE BREVET EUROPEEN

(11) **EP 0 533 581 A1**
(43) Date de publication de la demande: **24.03.1993**
(21) Numéro de dépôt: 92402569.5
(22) Date de dépôt: 18.09.1992
(51) Int. Cl.: H04B 10/00, H04B 10/24

(54) **Appareillage de communication bi-directionnelle entre deux objets, et système d'arme comprenant un véhicule et au moins une charge d'emport de ce véhicule, équipé d'un tel appareillage**

(30) Priorité: 20.09.1991 FR 9111611
(71) Demandeur: THOMSON-BRANDT ARMEMENTS, F-45240 La Ferté St. Aubin (FR)
(72) Inventeur: Cheitan, Michel, F-92045 Paris la Défense (FR); d'Auria, Luigi, F-92045 Paris la Défense (FR); Iscla, Michel, F-92045 Paris la Défense (FR); Joset, Gérard, F-92045 Paris la Défense (FR); Laurent, Robert, F-92045 Paris la Défense (FR); Poulard, Eric, F-92045 Paris la Défense (FR)
(74) Mandataire: Chaverneff, Vladimir

(57) **Abrégé**

L'invention concerne un appareillage de communication entre deux objets (1, 2) sans liaison filaire entre eux, comprenant deux jeux d'émetteur-récepteur (3, 4) comportant des circuits d'émission et de réception d'informations, solidarisés chacun à l'un des objets. Elle concerne également un système comprenant un véhicule et au moins une charge d'emport, équipé d'un tel appareillage.

Selon l'invention, l'un des jeux (3) d'émetteur-récepteur comprend une source de rayonnement d'énergie d'alimentation (9), et l'autre (4) un capteur-transducteur (22) d'énergie rayonnée en énergie électrique sous la forme d'un courant électrique, pour alimenter les circuits d'émission et de réception d'informations dudit autre jeu (4). Le véhicule (1) est équipé du jeu (3) comprenant la source de rayonnement d'énergie d'alimentation (9), et la charge (2) est équipée du jeu (4) comprenant le capteur-transducteur (22).

L'invention est adaptée à la commande de charges d'emport notamment d'aéronefs.

## Description

L'invention concerne un appareillage de communication bi-directionnelle simultanée ou non entre deux objets en l'absence de liaison filaire entre ces deux objets, comprenant deux jeux d'émetteur-récepteur comportant chacun des circuits électriques d'émission et de réception d'information, solidarisés chacun à l'un des objets.

Elle concerne également un système d'arme comprenant un véhicule et au moins une charge d'emport de ce véhicule, en tant qu'objets équipés d'un tel appareillage.

Le dispositif de l'invention doit permettre un "dialogue" entre deux objets tels qu'un aéronef et sa charge largable ou non ou l'une de ses charges, indépendamment de l'organisation des appareils assurant le dialogue et en particulier indépendamment de la non-standardisation des moyens de fixation de charges des véhicules d'emport et des charges d'emport.

De manière classique, les appareils assurant le dialogue sont implantés respectivement dans la partie inférieure du pylône de l'aéronef et dans la partie supérieure de la charge d'emport.

On connaît, pour communiquer entre deux objets, des émetteurs-récepteurs susceptibles d'assurer un tel dialogue ; ces émetteurs-récepteurs sont des appareils autonomes, notamment en ce qui concerne leur alimentation, dont l'organisation est complexe et peu adaptée à ce genre d'application qui requiert que la charge soit équipée de circuits aussi peu encombrants, aussi peu onéreux et aussi fiables que possible.

On connaît également des appareillages de communication à liaison filaire, mais ces appareillages sont soumis à des contraintes d'implantation nécessitant le vis-à-vis de connecteurs largables. De plus, le branchement de ces connecteurs ne pouvant pas être réalisé avant l'accrochage de la charge à cause des surlongueurs de fils que cela impliquerait il est nécessaire de prévoir une trappe d'accès dans les pylônes. Cette trappe, outre son coût, entraîne l'affaiblissement de la tenue mécanique de la structure des pylônes. De plus, les liaisons filaires engendrent des contraintes mécaniques lors de la séparation. Enfin, compte tenu des critères d'emport, la défiabilisation des connexions par les mouvements relatifs est possible.

L'invention a pour objet un appareil de communication du type précité et concerne à cet effet un appareillage de communication bi-directionnelle entre deux objets en l'absence de liaison filaire entre ces deux objets, comprenant deux jeux d'émetteur-récepteur comportant chacun des circuits électriques d'émission et de réception d'informations, solidarisés chacun à l'un des objets, l'un des jeux d'émetteur-récepteur comprenant au moins une source de rayonnement d'énergie d'alimentation, et l'autre jeu comprenant au moins un capteur-transducteur d'énergie rayonnée en énergie électrique sous la forme d'un courant électrique, pour alimenter les circuits électriques d'émission et de réception d'informations dudit autre jeu à partir de l'énergie rayonnée par ladite source de rayonnement, caractérisé par le fait que l'appareillage comporte un dispositif de compensation automatique de variation de la distance entre une face de la charge d'emport et une face du véhicule, formant guide, télescopique, fixé sur le véhicule, mis en contact avec la charge, lorsque celle-ci est en place sur le véhicule, par un ressort.

Elle concerne également un système d'arme comprenant un véhicule et au moins une charge d'emport de ce véhicule et au moins une charge d'emport de ce véhicule équipés d'un appareillage tel que défini ci-dessus, caractérisé en ce que le véhicule est l'objet auquel est solidarisé le jeu émetteur-récepteur comprenant la source de rayonnement d'énergie d'alimentation, et la charge est l'objet auquel est solidarisé le jeu émetteur-récepteur comprenant le capteur-transducteur.

Les caractéristiques et avantages de l'invention ressortiront de la description qui va suivre d'une forme de réalisation préférentielle de l'invention donnée à titre d'exemple non limitatif et illustrée sur les dessins ci-joints dans lesquels :
- les figures 1, 2 et 3 montrent schématiquement des exemples d'emplacements d'implantation de l'appareillage selon l'invention sur un aéronef et sur une charge d'emport, et
- les figures 4, 4a et 4b montrent schématiquement en perspective, de manière plus détaillée, l'implantation correspondant à la figure 2, les figures 4a et 4b étant des détails de la figure 4.

L'appareillage décrit a titre d'exemple est destiné à permettre un dialogue, c'est-à-dire une communication bi-directionnelle, entre un aéronef dont seul un pylone 1 est représenté sur les figures, et au moins une charge d'emport 2.

Selon l'invention, ce dialogue est permis, en l'absence de liaison filaire entre le pylone et la charge d'emport, grâce à la mise en oeuvre de dispositifs opto-électroniques émetteurs-récepteurs appartenant à deux appareils 3, 4 implantés par exemple l'un sur le pylone 1, et l'autre sur la charge d'emport 2 ; l'alimentation en énergie des éléments de l'appareil constitué d'un jeu émetteur-récepteur implanté sur la charge d'emport est réalisée par téléalimentation ; la source de rayonnement d'énergie est ici une diode laser solidarisée à l'aéronef, et le capteur d'énergie rayonnée est un transducteur opto-électronique constitué par une cellule photo-réceptrice solidarisée à la charge d'emport. Cette cellule transforme d'énergie émise par la diode laser et qu'elle capte,en énergie sous la forme d'un courant électrique adapté à alimenter les circuits électriques d'émission et de réception d'informations appartenant au jeu émetteur-récepteur de la charge.

L'absence d'interférence est obtenue par le choix technologique des composants, ou par un traitement de surface sur les dispositifs optiques, par exemple.

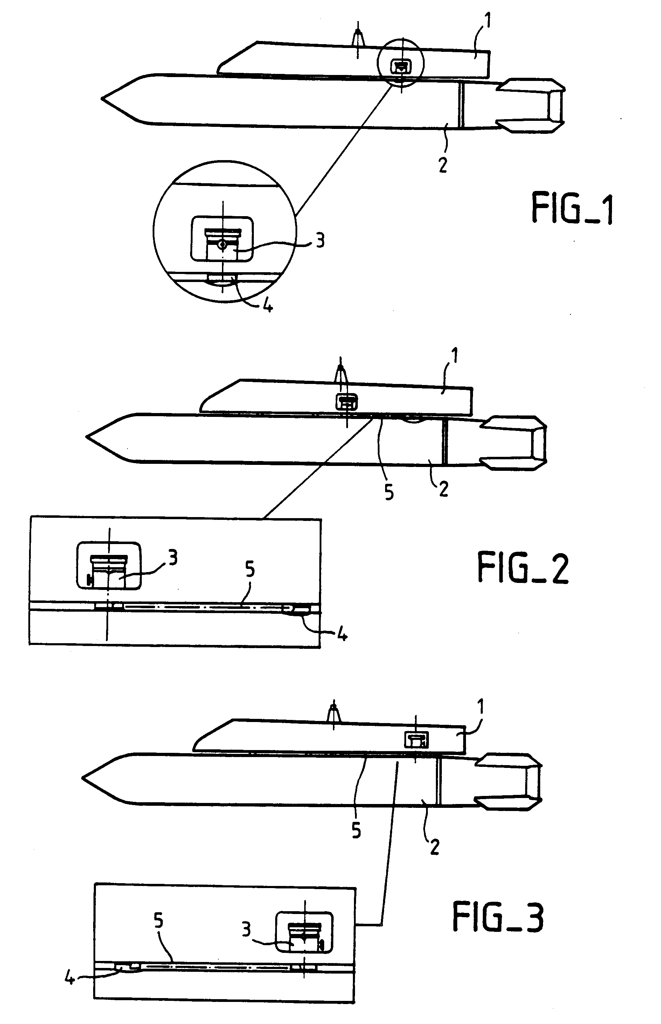

Le jeu émetteur-récepteur solidarisé au pylône de l'aéronef 1 et celui solidarisé sur la charge 2 sont disposés en visibilité directe, par exemple le second sur la génératrice de la charge qui passe par le premier. En revanche, ils peuvent être soit superposés en regard (figure 1), soit décalés longitudinalement, celui de la charge étant derrière (figure 2) ou devant (figure 3) celui de l'aéronef. A cet effet, un dispositif de compensation automatique 5 de la variation de la distance entre la face supérieure de la charge d'emport et la face inférieure du pylône, formant guide, télescopique, est fixé sur le pylône 1, en contact avec la charge d'emport 2.

Le jeu émetteur-récepteur 3 de l'aéronef est ici implanté dans un logement du pylône 1 appartenant à cet aéronef, en lieu et place du connecteur électrique utilisé dans le cas d'un appareillage à liaisons filaires.

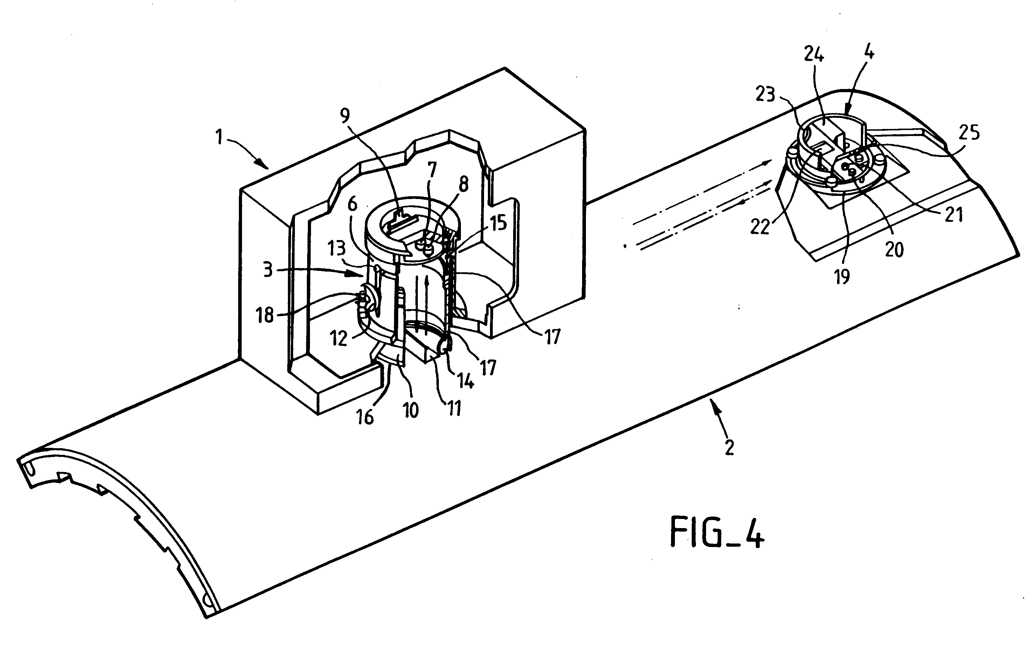

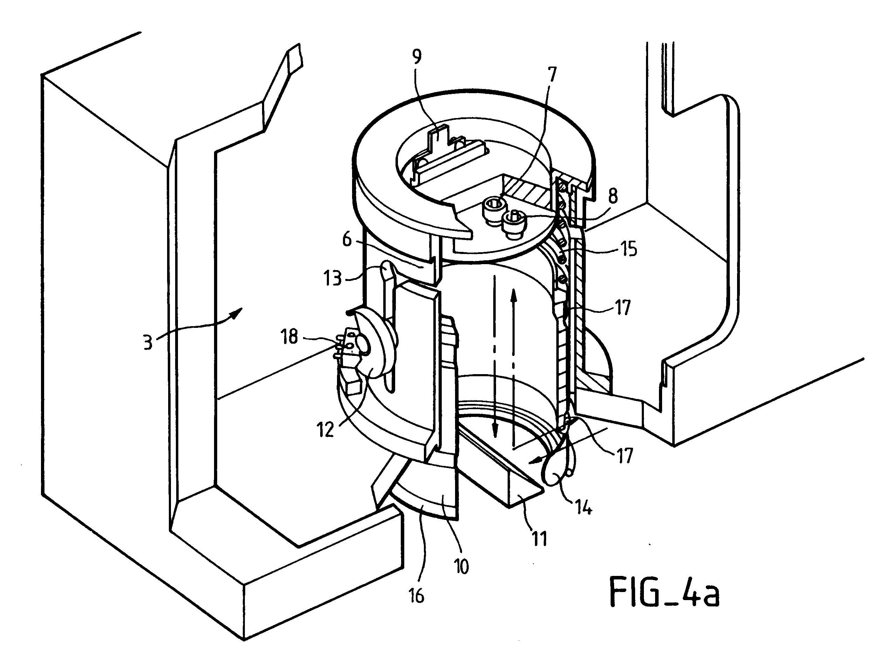

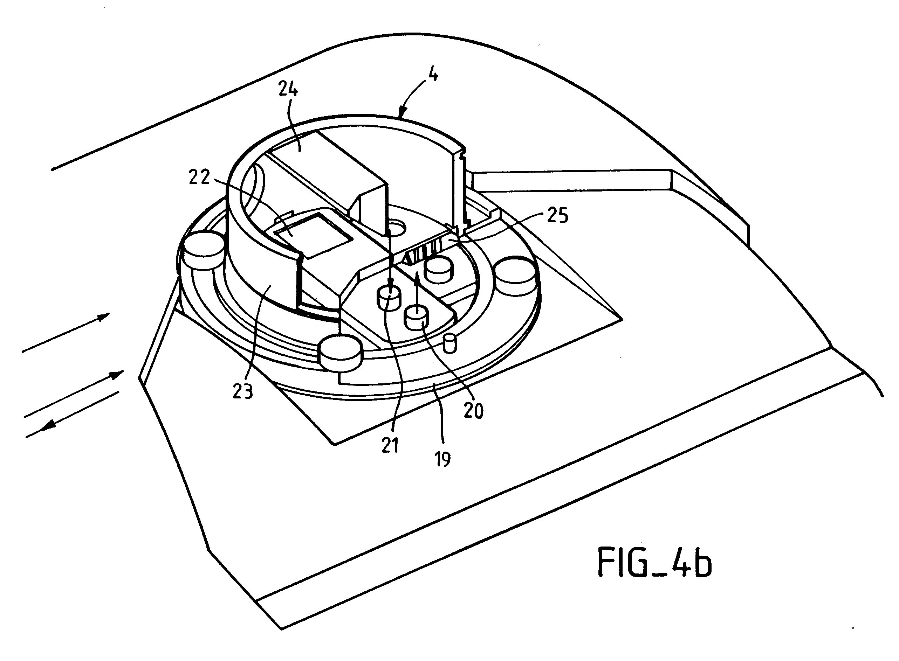

Il comprend (figures 4 et 4a), à l'intérieur d'un boîtier sous la forme d'un fût 6 de forme générale cylindrique dont l'axe est vertical, un dispositif émetteur d'informations telles que des données, comportant en sortie une source d'énergie sous la forme d'une diode laser 7, un dispositif récepteur des données à cellule photosensible 8 adapté à recevoir le rayonnement laser émis par l'émetteur de la charge, et un dispositif de téléalimentation également à source d'énergie sous la forme d'une diode laser 9, dont les faces d'émission ou de réception optique sont tournées vers la charge ; cependant, les fonctions des diodes 7 et 9 peuvent être assurées par une diode unique ; un cylindre 10 supportant un miroir escamotable 11 de renvoi à 90 degrés selon la génératrice de la charge passant par le jeu émetteur-récepteur de celle-ci, est monté coulissant axialement dans le fût 6. Le cylindre 10 est muni en un point de sa périphérie, d'un doigt 12 d'indexage par rapport au fût, permettant un indexage angulaire du cylindre dans la position de mise en regard du jeu émetteur-récepteur de l'aéronef par rapport au jeu émetteur-récepteur de la charge, retenue comme correcte ; le fût 6 est muni de rainures 13 pour permettre le mouvement, coulissant, du doigt 12.

Le cylindre 10 comporte, dans sa partie inférieure, une fenêtre 14 permettant le passage des flux lumineux échangés entre le jeu émetteur-récepteur de l'aéronef et celui de la charge d'emport.

Un ressort 15 hélicoïdal en appui contre le sommet du fût 6 est monté en compression contre le cylindre 10 de manière à le pousser en direction de la paroi en correspondance de la charge d'emport, un amortisseur 16 étant interposé entre ces deux pièces. Des moyens tels qu'une rampe 17 et un contacteur 18 prévus l'un sur le cylindre 10 et l'autre sur le fût 6 coopèrent par pression de telle sorte que le contacteur interrompe l'émission de la diode laser 9 de téléalimentation lorsque le cylindre 10 est en position haute, ce qui correspond à une charge d'emport non en place, ou en position basse, ce qui correspond à une charge d'emport larguée, la position de téléalimentation étant une position intermédiaire.

Le jeu émetteur-récepteur 4 de la charge 2 est implanté conformément à la figure 2, dans un logement creusé dans la paroi extérieure de la charge.

Il comprend (figures 4 et 4b), à l'intérieur d'une cuvette cylindrique 19 à axe vertical (radial si la charge est de forme générale cylindrique), un dispositif émetteur de données à diode laser 20, un dispositif récepteur de données à capteur-transducteur sous la forme d'une cellule photosensible 21 adapté à recevoir le rayonnement laser émis par l'émetteur du pylône, et un dispositif d'alimentation à capteur transducteur sous la forme d'une cellule photo-réceptrice 22 adapté à recevoir le rayonnement émis par le dispositif de téléalimentation à diode laser 9 ; cependant, les fonctions des cellules 21 et 22 peuvent être assurées par une cellule unique ; à l'intérieur de la cuvette, est disposé un support orientable 23 portant un miroir escamotable 2 4 servant également éventuellement et sélectivement de relais entre les deux jeux d'émetteur-récepteur ; le support orientable 23 est monté pivotant autour d'un axe vertical (sur la figure) ; un dispositif de verrouillage 25 permet d'immobiliser et de verrouiller le support 23 et le miroir 24 dans l'orientation nécessitée par la configuration choisie (celle de l'une des figures 1 à 3), à savoir jeux d'émetteur-récepteur superposés, ou décalés l'un en arrière de l'autre mais sur la même génératrice de la charge, supposée de forme générale cylindrique.

La mise en oeuvre de l'appareillage est très simple, puisque, soit on escamote les miroirs 11, 24 des deux jeux d'émetteur-récepteur (configuration de la figure 1), soit on oriente les oriente l'un vis-à-vis de l'autre (configuration de la figure 2 ou de la figure 3) ; puis, on oriente le cylindre 10 dans le fût 6, et on l'immobilise en se servant de son doigt d'indexage 12; après quoi, on verrouille le support orientable 23 au moyen du dispositif de verrouillage 25. La distance du miroir 11 à la charge d'emport 2 est maintenue constante sous l'action du ressort 15. L'appareillage est alors prêt à l'emploi avec téléalimentation du jeu émetteur-récepteur de la charge par le jeu du pylône, jusqu'au départ de la charge.

Bien entendu, l'invention n'est pas limitée à la forme de réalisation ci-dessus décrite et représentée, et on pourra en prévoir d'autres formes sans sortir de son cadre.

## Revendications

1. Appareillage de communication bi-directionnelle simultanée ou non entre deux objets (1, 2) en l'absence de liaison filaire entre ces deux objets, comprenant deux jeux d'émetteur-récepteur (3, 4) comportant chacun des circuits électriques d'émission et de réception d'informations, solidarises chacun à l'un des objets, l'un des jeux -(3)-d'émetteur-récepteur comprenant au moins une source de rayonnement d'énergie d'alimentation (9), et l'autre jeu (4) comprenant au moins un capteur-transducteur (22) d'énergie rayonnée en énergie électrique sous la forme d'un courant électrique, pour alimenter les circuits électriques d'émission et de réception d'informations dudit autre jeu (4) à partir de l'énergie rayonnée par ladite source de rayonnement, caractérisé par le fait que l'appareillage comporte un dispositif de compensation automatique (5) de variation de la distance entre une face de la charge d'emport et une face du vehicule, formant guide, telescopique, fixe sur le vehicule, mis en contact avec la charge, lorsque celle-ci est en place sur le vehicule, par un par ressort (15)

2. Appareillage selon la revendication 1, caractérisé en ce que la source de rayonnement d'énergie d'alimentation (9) est un laser ou une diode laser.

3. Appareillage selon la revendication 1, caractérisé en ce que le capteur-transducteur (22) pour alimenter les circuits électriques d'informations est une cellule photo-réceptrice.

4. Appareillage selon la revendication 1, caractérisé en ce que le jeu émetteur-récepteur (3) comprenant une source d'énergie d'alimentation (9) comporte un miroir mobile et escamotable (11) de renvoi de l'énergie rayonnée, et des moyens d'indexage dans une position de mise en regard du jeu émetteur-récepteur (3) par rapport à l'autre jeu émetteur-récepteur (4).

5. Appareillage selon la revendication 1, caractérisé en ce que le jeu émetteur-récepteur (3) comprenant une source d'énergie d'alimentation (9) comporte des moyens interrupteurs (17, 18) de l'émission de la source de rayonnement d'énergie d'alimentation (9), pour supprimer l'émission lorsque les deux objets (1, 2) sont éloignés.

6. Appareillage selon la revendication 1, caractérisé en ce que le jeu émetteur-récepteur (4) comprenant un capteur-transducteur (22) d'énergie rayonnée pour alimenter des circuits électriques d'émission et de réception d'informations, comporte un miroir orientable et escamotable (24) servant sélectivement de relais entre les deux jeux d'émetteur-récepteur (3, 4).

7. Système d'arme comprenant un vehicule (1) et au moins une charge d'emport (2) de ce vehicule équipés d'un appareillage (3, 4, 5) selon l'une quelconque des revendications 1 à 6, caractérisé en ce que le véhicule (1) est l'objet auquel est solidarise le jeu émetteur-récepteur (3) comprenant la source de rayonnement d'énergie d'alimentation (9), et la charge (2) est l'objet auquel est solidarisé le jeu émetteur-récepteur (4) comprenant le capteur-transducteur (22).

8. Système d'arme selon la revendication 7, caractérisé en ce que le jeu émetteur-récepteur (3) du vehicule (1) et celui (4) de la charge d'emport (2) sont disposés superposés.
